# EUROPEAN PATENT SPECIFICATION

(11) **EP 2 996 456 B1**
(45) Date of publication and mention of the grant of the patent: **05.07.2017**
(21) Application number: 14731369.6
(22) Date of filing: 15.05.2014
(51) Int. Cl.: A01D 46/28

(54) **APPARATUS FOR THE PROCESSING AND THE SORTING OF AN OLIVE HARVEST**
VORRICHTUNG ZUR VERARBEITUNG UND SORTIERUNG EINER OLIVENERNTE
APPAREIL SERVANT À TRAITER ET TRIER UNE RÉCOLTE D'OLIVES

(30) Priority: 17.05.2013 IT FI20130113
(43) Date of publication of application: 23.03.2016
(73) Proprietor: Gonnelli 1585 S.r.l., 50066 Reggello (Firenze) (IT)
(72) Inventor: GONNELLI, Piero, 50066 Reggello (Firenze) (IT)
(74) Representative: Soldatini, Andrea
(86) International application number: PCT/IB2014/061469
(87) International publication number: WO 2014/184769

(56) References cited:
- WO-A1-2009/016115
- WO-A1-2012/150355
- FR-A1- 2 516 743
- FR-A1- 2 589 371
- FR-A1- 2 861 952
- US-A1- 2011 112 684

## Description

### Field of the invention

The present invention concerns an apparatus for the defoliation or sorting of fruits and more in particular an apparatus for the defoliation or the sorting of olives.

### Background of the invention

The harvesting of olives, as known, provides collecting the fruit from the trees manually (through the use of special rakes) or mechanically (through mechanical olive harvesters). Both harvesting methods, however, do not prevent undesired plant waste like leaves or twigs from being removed, together with the fruit. Moreover, during the harvesting, olives can be mistakenly taken from the tree with leaves or portions of branch still attached to them. This plant waste must be eliminated before proceeding on to the pressing since they can alter the flavour and the colour of the oil, substantially reducing the quality thereof.

Currently, there are several examples of machines that are used for sorting olives; such machines are known as defoliator machines or sorting machines.

Some known defoliator machines use blowers or ventilation systems that separate the lightest plant waste from the olives simply by exploiting the weight difference. An air flow indeed acts on the picked fruit falling inside the defoliator machine, separating the lightest material such as the leaves or small portions of twigs, from the heaviest part, like the fruit.

Such a type of defoliator machine however has many drawbacks. Firstly, it is not capable of selecting and separating heavier twigs, with a weight that is equal to or greater than that of single olives. Furthermore, it is not capable of eliminating the branches and the leaves that are still attached to the olives. In this last case, the fruit still attached to the branches or foliage is eliminated together with the waste, with a consequent waste of money and a reduction in the income from the harvest.

Known defoliator machines, therefore, are not capable of suitably separating the harvested rough product; for such a reason, part of the sorting must be carried out manually with a substantial waste of time and energy.

Examples of known defoliator machines such as those above described are disclosed e.g. in French patent publication FR2516743 and International patent publication WO2009/016115.

### Summary of the invention

The object of the present invention is therefore to provide a sorting apparatus for olives with a greater efficiency in the separation of the olives from leaves, twigs and other waste.

A further object of the present invention is to provide a sorting apparatus that is capable of recovering also the olives remaining attached to leaves or parts of branches.

These and other objects are achieved by the sorting apparatus according to the invention, the essential characteristics of which are defined by the first of the attached claims. Further important characteristics are defined by the dependent claims.

### Brief description of the drawings

The characteristics and the advantages of the sorting apparatus according to the present invention shall be more apparent from the following description of embodiments thereof provided by way of non-limiting example with reference to the attached drawings wherein:
- figure 1 shows a front view, with parts omitted, and according to a functional representation, of a sorting apparatus according to the invention;
- figure 2 is a top view of a movable sorting means of the apparatus of figure 1, shown schematically and according to a functional representation with parts that have been omitted;
- figure 3 is again a top view, shown schematically and functionally, of a mobile grid surface of the apparatus, with the aforementioned movable sorting means that have been omitted in order to simplify its representation.

### Detailed description of the invention

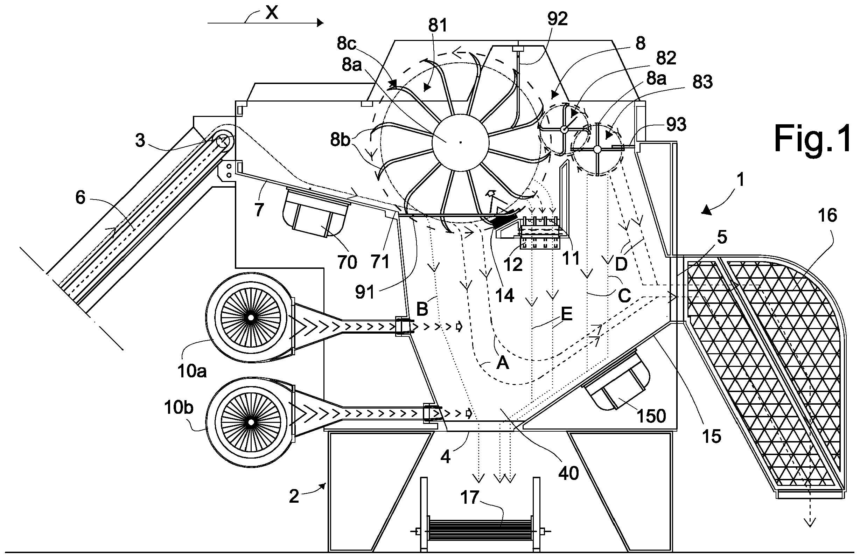

With reference in particular to figure 1, the sorting apparatus according to the invention comprises a main body 1 that is kept lifted with respect to a ground plane by a base 2. On the main body 1 (or rather on an outer frame thereof) three apertures are formed, including an inlet feeding aperture 3, a first outlet aperture 4 of the olives (or the fruit in general) and a second outlet aperture or discharge aperture 5 of the plant waste.

The feeding and discharging apertures 3, 5 open up on opposite sides of the main body and define, between them, an immaterial processing direction of the plant waste (highlighted in the figure by a bold broken line, indicated with X) inside the defoliator.

The first outlet aperture 4 opens, on the other hand, on the bottom of the main body 1 and allows for the fruit or the olives to come out, cleared from the plant waste.

Such a first outlet aperture 4 opens on the bottom of a funnel-shaped outlet duct 40 of the defoliator, such a duct being positioned substantially below fixed and mobile processing means for sorting the harvested rough product. Such processing means, which will be discussed further on, have the task of separating the fruits from the waste plant material (twigs, leaves, etc.).

In greater detail, a conveyor belt 6 is arranged at the feeding aperture 3. The belt 6 occupies the aperture by penetrating it partially, for allowing the harvested rough product to be transported inside the main body of the defoliator. At the end of the conveyor belt a first vibrating table 7, actuated by a vibrant electric motor 70, is arranged in succession and in continuity with the belt.

The first table 7, thanks to the effect of the vibrations, spreads out the rough product on the entire surface of the table itself and also obtains at least a partial separation of the rough product (due to the vibrations for example the leaves, which are lighter, tend to move to the surface and rearwards). Moreover, the inclination and the very movement of the table push the harvest forwards according to the processing direction X.

In succession with the table, the apparatus provides for mobile processing means such as a group of counter rotating comb wheels 8, arranged in sequence and interfering one with the following one so as to move the rough material forwards according to the processing direction X.

In particular, the group of comb wheels 8 comprises a first wheel or greater wheel 81, a second wheel or central wheel 82 and a third wheel or smaller wheel 83. The three wheels have rotation axes that are perpendicular with respect to the processing direction X and are staggered with one another, according to vertexes of an imaginary triangle. Each wheel comprises a central hub 8a through which the support and drive of the wheel are carried out; for such a purpose the hub is connected to motor drive means, not shown in the figures. From the hub, the wheel develops with ranks of teeth 8b that are radially arranged with respect to the rotation axis of the wheel itself. Each rank of teeth forms a comb 8c: the teeth are indeed connected at one end to the hub, whereas the opposite end is free, indeed like in the case of the teeth of a comb. According to a preferred embodiment, the teeth consist in respective portions of metal bar that is suitably curved at the free end.

The greater wheel 81 is the one closest to the vibrating table 7 and has a faster speed. The third wheel or smaller wheel 83, on the other hand, has a slower speed and the central wheel 82 has a speed of around four times greater than the slow wheel. The central wheel and the smaller wheel both rotate in a clockwise direction, whereas the greater wheel 81 counter rotates with respect to them, rotating in an anti-clockwise direction.

The aforementioned fixed sorting means are arranged so as to interlock with the above wheels. In greater detail, the greater wheel 81 and smaller wheel 83 cooperate with fixed comb shaped grids, that are integrally connected to the frame of the apparatus. As shown in particular in figure 1, the greater wheel 81 interlocks with two comb grids, of which one is a horizontal grid 91 and one is a vertical grid 92 (were by the terms horizontal and vertical it is meant the arrangement of the grids with respect to a ground plane on which the apparatus rests). Both the grids are formed by a plurality of straight rods 9a that are parallel to one another, which are connected at an end thereof to the frame and are free at the opposite end as well as mutually spaced so that the gaps defined between adjacent small rods can be crossed in motion by the teeth 8b during the rotation of the wheel.

The rods 9a of the grids and in particular of the horizontal grid 91 are spaced so as to allow the fall of the olives but not that of the waste plant material, such as twigs, foliage, to which fruit can still be attached. Such a material thus remains blocked on the surface of the grid so as to be affected by the rotation of the greater wheel 81, as explained hereafter. The first horizontal grid therefore allows for a first selection, for gravity fall of the material, being arranged at the end of the vibrating table 7.

With respect to the interlock region of the second wheel 82 with the first wheel 81, and taking as a reference the direction of rotation of the first wheel, the horizontal grid is placed in a upstream position whereas the vertical grid is placed in a downstream position. The vertical grid treats therefore therefore the material downstream with respect to the first grid.

Finally, a second horizontal fixed comb grid 93 is positioned so as to interlock with the smaller wheel 83, at the end of the group of wheels 8. Also the second horizontal fixed grid has rods that are sufficiently spaced so as to allow the insertion of the teeth of the smaller wheel between the rods of the grid, following the rotation movement of the wheel.

The apparatus, and in particular of the group of wheels 8, works thus as follows. The combs 8c of the greater wheel 81 pass close to a downstream end 71 of the vibrating table promoting the fall of the harvest on the first horizontal grid 91.

One part of the rough product, that is the part consisting of fruits or leaves, or anyway by elements having small dimensions, penetrates inside the gaps of the comb-grid 91 falling inside the funnel-shaped duct 40, towards the first outlet aperture 4.

As shown in figure 1, the funnel-shaped duct 40 is affected by at least one air flow and in particular by two airflows that are generated by respective blowing or ventilation means 10. These comprise electrical fans for introducing a forced air convection inside the duct. The fans are arranged over one another with respect to the falling direction of the elements (that is, with respect to the ground plane); in particular an upper fan 10a is positioned substantially so that the air flow generated by it runs over the discharge aperture 5, whereas a lower fan 10b is arranged so that its stream is in correspondence with the first outlet aperture 4.

Thanks to such air streams the leaves, or in any case the waste lighter than the fruits, are deviated towards the second outlet aperture 5 so as to be eliminated (according to a stream that is highlighted by the broken line indicated in figure 1 with the letter A). The fruits on the other hand fall towards the first outlet aperture, as highlighted by the broken line indicated in the figures with the letter B.

The part of harvest that has not already fallen towards the funnel-shaped duct 40 (the part which is made up of material with greater dimensions like gravel or twigs and foliage to which fruit can still be attached) is trapped, as mentioned above, by the first comb-grid 91. The interlock between the combs of the wheel 81 and the grid 91, ensures that the plant waste is at least partially fragmented and the fruit is separated from the plant elements still attached to it (foliage or twigs). Indeed, the interference between the combs of the wheel and the fixed grid, firstly makes it possible to trap sufficiently elongated waste material, such as twigs or foliage and secondly, due to the rotation movement of the wheel, to detach the fruit that is still attached to such waste. In order to promote such a detachment effect, the interlock between the wheel combs and the grid is such that each tooth is almost in contact with two consecutive small rods of the grid itself. This tight relationship between the tooth and the small rods indeed determines a "combing" effect of the twigs or foliage.

The branches and the harvest that have not undergone processing, are brought into rotation by the greater wheel 81 until the vertical grid 92 is reached, and there the same combing effect and a sorting step of the fruits is repeated. After the passages through the two comb shaped grids a great part of fruits have been sorted. However, to improve the sorting effect the material proceeds also through the second and third wheel. In particular, the rough material that is not able to pass through the vertical grid falls back towards the central wheel 82 which, counter rotating with respect to the greater wheel, pushes the material towards the third wheel 83. Here, there is a third sorting step thanks to the interlock (that is completely analogous to that described above between the greater wheel and the first horizontal grid) between the smaller wheel 83 and the second horizontal comb-grid 93.

Only when the fruit is free from the plant waste it falls towards the funnel-shaped duct (as indicated by the broken line C), since the combs of the wheel or the fixed grid are no longer able to further hold it and trap it.

Possibly, also fragments of plant waste with small dimensions can fall in the duct but are, in any case, directed towards the discharge aperture by effect of the air streams described above.

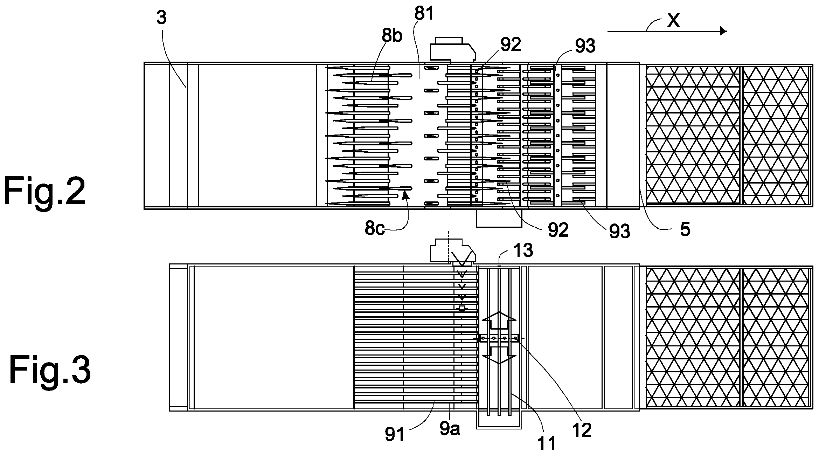

According to a further aspect of the invention and with particular reference to figure 3, below the first comb wheel 81 a horizontal grating 11 is arranged on which waste with great dimensions or waste that is particularly heavy (like gravel) falls. The grating has gaps with dimensions such as to allow the fruit to fall towards the outlet duct 40 (as indicated by the broken line E in figure 1). The grating 11 is engaged by a comb 12 that translates according to a translation axis that is perpendicular with the processing direction X (that is, parallel to the rotation axes of the wheels).

Due to the translation movement of the comb 12, all the waste present on the grating is directed towards a further lateral outlet aperture 13.

The grating is moreover affected by a lateral air stream 14 which makes it possible to keep the lighter material (such as, in particular, twigs or foliage) lifted from the grating so that it can be recollected by the greater wheel 81 and again pulled into the sorting process described above.

Returning now to the funnel-shaped duct 40, at an opposite side with respect to that on which the fans are mounted, a second vibrating table 15 (associated with a vibrant electric motor 150) is arranged, substantially below the wheel group 8, between the first outlet aperture 4 and the discharge aperture 5. The second table 15 is inclined towards the outlet aperture and is affected in particular by the air stream of the lower fan 10b.

Thanks to the vibrating movement, not only are the olives directed more quickly towards the outlet aperture 4, but in case of possible waste material still present, the vibration allows for it to be sorted, separating it from the fruit so that it can be easily blown towards the discharge aperture.

The discharge aperture 5 is moreover associated with a beak-shaped discharge tube 16 pointing to the ground so that the waste is directed towards the outside in a correct manner. The discharge channel 16, made from metal mesh, prevents the waste from being thrown out and accidentally and hurting the worker in charge of the apparatus.

Below the discharge aperture 4, thanks to the fact that the base 2 keeps the main body 1 of the apparatus lifted, it is possible to position a harvesting collector, such as a case or, in case of a great amount of harvest to be processed, a conveyor belt 17 (as shown in the figure).

The defoliator according to the invention has numerous advantages. In particular it obtains an efficient separation of the fruit from the plant waste. Furthermore, it also allows for even the fruits remaining attached to twigs or foliage to be separated. Such fruits are torn away from the twig or from the foliage thanks to the "combing" effect of the mobile wheels on the fixed grids and are sent to the outlet aperture, whereas the plant waste is in turn shredded and easily eliminated.

The defoliator thus achieves a surprising result in terms of reliability and performance. Almost all of the fruit entering the apparatus are indeed recovered, significantly reducing the amount of fruits lost by mistake in the sorting of the rough material. It is therefore also an obvious advantage in economic terms for the owner of the harvest.

The present invention has been described herein with reference to preferred embodiments thereof. It should be observed that there can be other embodiments referring to the same inventive concept, all falling within the scope of protection of the following claims.

## Claims

1. An apparatus for the processing and the sorting of a rough product as that resulting from the harvesting of fruits from trees, said rough product comprising at least fruits, plant material as leaves or branches and fruits yet attached to plant material as leaves or branches, said apparatus comprising:
- feeding means (6, 7) for the feeding of said rough product;
- fixed sorting means of said rough product comprising a comb shaped grid (91) formed by a plurality of parallel spaced rods and horizontally arranged according to a processing direction (X) of said rough product into said apparatus, said comb-grid being adapted to carry out a first sorting of said fruits from said plant material, via gravity fall, and also to trap at least said fruit attached to plant material as leaves or branches;
- an outlet duct (40) arranged substantially below said grid (91);
- blowing means (10a, 10b) associated to said outlet duct (40) to direct, as a function of the different weight, said fruits towards a first outlet aperture (4) and said plant waste material towards a second outlet aperture (5);
- movable sorting means comprising a first comb wheel (81) rotating around an axis perpendicular to said processing direction (X), said wheel comprising a plurality of combs (8c) arranged radially with respect to said axis, said combs interlocking with gaps of said grid (91) for trapping the waste plant material held on the grid, whereby the relative motion of said combs (8c) with respect to said grid (91) obtains the detachment of the fruit attached to said plant material;
said apparatus being **characterised in that** it comprises a second fixed vertical comb-shaped grid (92) arranged perpendicular with respect to said fixed horizontal grid (91) and interlocking with said first comb wheel (81), said plant waste material being moved from said horizontal grid (91) to said vertical grid (92) by said first comb wheel (81), whereby the relative motion between said first comb wheel (81) and said vertical grid (92) obtains a further detachment of fruits that have remained attached to said plant material.

2. The apparatus according to claim 1, wherein said movable sorting means further comprise a second comb wheel (82) and a third comb wheel (83) arranged sequentially in said processing direction (X) and rotating in a opposite direction with respect to said first wheel (81), said second and third wheel comprising a plurality of combs arranged radially with respect to their own axis of rotation, the combs of said first, second and third wheel being mutually interlocked during the rotation of said wheels to carry the rough product from the first wheel (81) to the third wheel (83) according to said processing direction.

3. The apparatus according to claim 2, wherein said second fixed vertical grid (92) is arranged, with reference to the direction of rotation of said first wheel, in a subsequent position with respect to said first grid (91) and in a downstream position with respect to the interlocking area of said first wheel (81) with second wheel (82), said waste material being moved by said first wheel (81) from said horizontal grid (91) to said vertical grid (92), the material blocked by said second grid (92) falling toward said second wheel (82).

4. The apparatus according to claim 2 or 3, wherein a third fixed comb-shaped grid (93) is arranged horizontally, as said first grid (91), and interlocking with said third wheel (83).

5. The apparatus according to claim 4, wherein each of said grids (91, 92, 93) comprises a plurality of straight parallel rods (9a), an end of each of said rods being connected to a frame of said apparatus, the opposite end being a free end.

6. The apparatus according to claim 5, wherein each of said comb wheels (81, 82, 83) comprises ranks of teeth (8b) radially arranged around a hub, each rank defining a comb (8c) of the wheel.

7. The apparatus according to claim 6, wherein said rods (9a) of said grids are spaced to permit the passage of said fruit and other waste material having comparable size, and the penetration of said teeth (8b) of each wheel.

8. The apparatus according to any of the previous claims, wherein a grating (11) is arranged below said first wheel (81), a comb (12) being arranged to interlock with said grating (11) by sliding according to a sliding direction perpendicular to said processing direction (X) for pushing the waste material fallen from said wheel onto said grating towards a side outlet aperture (13).

9. The apparatus according to claim 8, wherein a sideways air stream (14) affects said grating, adapted to lift the material fallen on the grating so that it can be grabbed and brought into rotation by said first wheel (81).

10. The apparatus according any of the previous claims, wherein said blowing means are electric fans (10a, 10b).

11. The apparatus according to claim 10, wherein said fans comprise an upper fan (10a) arranged so that the air stream generated by it is directed towards said second outlet aperture (5) and a lower fan (10b) arranged so that the air steam generated by it is direct toward said first outlet aperture (4).

12. The apparatus according to any of the previous claims, wherein said feeding means comprise a vibrant table (7).

13. The apparatus according to claim 12, wherein said feeding means further comprise a conveyor belt (6), said vibrant table (7) being arranged between said conveyor belt and said grid (91).

14. The apparatus according to any of the previous claims, wherein a second vibrant table (15) is placed between said first and second outlet apertures (4, 5), inclined towards said first outlet aperture (4).

15. The apparatus according to any of the previous claims, wherein said first outlet aperture (4) is lifted with respect to a ground plane on which the apparatus rests, means for the collection of said fruits, such as a conveyor belt (17), being provided below said first outlet aperture (4).

## Patentansprüche

1. Vorrichtung für die Verarbeitung und das Sortieren eines Rohproduktes, wie jenes, das von dem Ernten von Früchten von Bäumen resultiert, wobei das Rohprodukt wenigstens Früchte, Pflanzenmaterial, wie Blätter oder Zweige, und Früchte, die noch an Pflanzenmaterial, wie Blättern oder Zweigen, angebracht sind, enthält, wobei die Vorrichtung enthält:
- Zuführeinrichtungen (6, 7) zum Zuführen des Rohproduktes;
- feststehende Sortiereinrichtungen für das Rohprodukt, enthaltend ein kammförmiges Gitter (91), das durch eine Mehrzahl von parallel beabstandeten Stäben gebildet und horizontal gemäß einer Verarbeitungsrichtung (X) des Rohproduktes in die Vorrichtung hinein angeordnet ist, wobei das Kamm-Gitter ausgelegt ist, um ein erstes Sortieren der Früchte von dem Pflanzenmaterial über einen Gravitationsfall auszuführen und auch wenigstens die Früchte, die an Pflanzenmaterial, wie Blättern oder Zweigen, angebracht sind, einzufangen;
- eine Auslassleitung (40), die im Wesentlichen unter dem Gitter (91) angeordnet ist;
- Blaseinrichtugen (1a, 10b), die mit der Auslassleitung (40) verbunden sind, um als eine Funktion des unterschiedlichen Gewichtes die Früchte zu einer ersten Auslassöffnung (4) hin und das Pflanzenabfallmaterial zu einer zweiten Auslassöffnung (5) hin zu lenken;
- bewegliche Sortiereinrichtungen, die ein erstes Kammrad (81) enthalten, das sich um eine Achse senkrecht zu der Verarbeitungsrichtung (X) dreht, wobei das Rad eine Mehrzahl von Kämmen (8c) enthält, die radial in Bezug auf der Achse angeordnet sind, wobei die Kämme mit Spalten des Gitters (91) ineinander greifen, um das Abfallpflanzenmaterial einzufangen, das an dem Gitter gehalten wird, wodurch die relative Bewegung der Kämme (8c) in Bezug auf das Gitter (91) das Loslösen der Früchte erzielt, die an dem Pflanzenmaterial angebracht sind;
wobei die Vorrichtung **dadurch gekennzeichnet ist, dass** sie ein zweites feststehendes vertikales kammförmiges Gitter (92) enthält, das senkrecht in Bezug auf das feststehende horizontale Gitter (91) angeordnet ist und in das erste Kammrad (81) eingreift, wobei das Pflanzenabfallmaterial von dem zweiten horizontalen Gitter (91) durch das erste Kammrad (81) zu dem vertikalen Gitter (92) bewegt wird, wodurch die relative Bewegung zwischen dem ersten Kammrad (81) und dem vertikalen Gitter (92) ein weiteres Loslösen der Früchte erzielt, die an dem Pflanzenmaterial angebracht verblieben sind.

2. Vorrichtung nach Anspruch 1, wobei die beweglichen Sortiereinrichtungen ferner ein zweites Kammrad (82) und ein drittes Kammrad (83) enthalten, die aufeinanderfolgend in der Verarbeitungsrichtung (X) angeordnet sind und sich in eine entgegengesetzte Richtung in Bezug auf das erste Rad (81) drehen, wobei das zweite und das dritte Rad eine Mehrzahl von Kämmen enthalten, die radial in Bezug auf ihre eigene Drehachse angeordnet sind, wobei die Kämme des erste, zweiten und dritten Rades während der Drehung der Räder wechselseitig in Eingriff sind, um das Rohprodukt entsprechend der Verarbeitungsrichtung von dem ersten Rad (81) zu dem dritten Rad (83) zu befördern.

3. Vorrichtung nach Anspruch 2, wobei das zweite feststehende vertikale Gitter (92) in Bezug auf die Drehrichtung des ersten Rades in einer nachfolgenden Position mit Bezug auf das erste Gitter (91) und in einer stromabwärtigen Position in Bezug auf den Eingriffsbereich des ersten Rades (81) mit dem zweiten Rad (82) angeordnet ist, wobei das Abfallmaterial von dem ersten Rad (81) von dem horizontalen Gitter (91) zu dem vertikalen Gitter (92) bewegt wird, wobei das Material, das von dem zweiten Gitter (92) blockiert wird, zu dem zweiten Rad (82) hin fällt.

4. Vorrichtung nach Anspruch 2 oder 3, wobei ein drittes feststehendes kammförmiges Gitter (93) wie das erste Gitter (91) horizontal angeordnet und mit dem dritten Rad (83) in Eingriff ist.

5. Vorrichtung nach Anspruch 4, wobei jedes der Gitter (91, 92, 93) eine Mehrzahl von geraden parallelen Stäben (9a) enthält, wobei ein Ende jedes der Stäbe mit einem Rahmen der Vorrichtung verbunden ist, wobei das entgegengesetzte Ende ein freies Ende ist.

6. Vorrichtung nach Anspruch 5, wobei jedes der Kammräder (81, 82, 83) Reihen von Zähnen (8b) enthält, die radial um eine Nabe herum angeordnet sind, wobei jede Reihe einen Kamm (8c) des Rades definiert.

7. Vorrichtung nach Anspruch 6, wobei die Stäbe (9a) der Gitter beabstandet sind, um den Durchgang der Früchte und weiterem Abfallmaterial, das eine vergleichbare Größe hat, und den Durchgriff der Zähne (8b) jedes Rades zu gestatten.

8. Vorrichtung nach einem der vorhergehenden Ansprüche, wobei ein Gitterrost (11) unter dem ersten Rad (81) angeordnet ist, wobei ein Kamm (12) angeordnet ist, um durch Verschieben in einer Verschieberichtung senkrecht zu der Verarbeitungsrichtung (X) mit dem Gitterrost (11) in Eingriff zu sein, um das Abfallmaterial, das von dem Rad auf den Gitterrost gefallen ist, zu einer seitlichen Auslassöffnung (13) zu schieben.

9. Vorrichtung nach Anspruch 8, wobei den Gitterrost ein seitwärts gerichteter Luftstrom (14) beeinflusst, der ausgelegt ist, das Material, das auf den Gitterrost gefallen ist, anzuheben, so dass es von dem ersten Rad (81) gegriffen und in Drehung gebracht werden kann.

10. Vorrichtung nach einem der vorhergehenden Ansprüche, wobei die Blaseinrichtungen elektrische Gebläse (10a, 10b) sind.

11. Vorrichtung nach Anspruch 10, wobei die Gebläse ein oberes Gebläse (10a), das so angeordnet ist, dass der von ihm erzeugte Luftstrom zu der zweiten Auslassöffnung (5) hin gerichtet ist, und ein unteres Gebläse (10b) enthält, das so angeordnet ist, dass der von ihm erzeugte Luftstrom zu der ersten Auslassöffnung (4) hin gerichtet ist.

12. Vorrichtung nach einem der vorhergehenden Ansprüche, wobei die Zuführeinrichtungen einen vibrierenden Tisch (7) enthalten.

13. Vorrichtung nach Anspruch 12, wobei die Zuführeinrichtungen ferner ein Förderband (6) enthalten, wobei der vibrierende Tisch (7) zwischen dem Förderband und dem Gitter (91) ange-ordnet ist.

14. Vorrichtung nach einem der vorhergehenden Ansprüche, wobei ein zweiter vibrierender Tisch (15) zwischen den ersten und zweiten Auslassöffnungen (4, 5) zu der ersten Auslassöffnung (4) hin geneigt angeordnet ist.

15. Vorrichtung nach einem der vorhergehenden Ansprüche, wobei die erste Auslassöffnung (4) in Bezug auf eine Grundebene, auf der die Vorrichtung steht, angehoben ist, wobei Einrichtungen zum Sammeln der Früchte, wie ein Förderband (17), unter der ersten Auslassöffnung (4) vorgesehen ist.

## Revendications

1. Un appareil pour le traitement et le tri d'un produit brut comme celui du résultat de la récolte de fruits provenant d'arbres, ledit produit brut comprenant au moins des fruits, du matériau végétal comme des feuilles ou des branches et des fruits encore attachés au matériau végétal sous forme de feuilles ou de branches, ledit appareil comprenant:
- des moyens d'alimentation (6, 7) pour l'alimentation en dit produit brut;
- des moyens de tri fixes dudit produit brut comprenant une grille en forme de peigne (91) formée d'une pluralité de tiges parallèles espacées et agencées horizontalement selon une direction de traitement (X) dudit produit brut vers l'intérieur dudit appareil, ladite grille-peigne étant adaptée pour effectuer un premier tri desdits fruits à partir du dit matériau végétal, via une chute par gravité, et également retenir au moins ledit fruit attaché au matériau végétal comme des feuilles ou des branches;
- un conduit de sortie (40) disposé sensiblement en dessous de ladite grille (91);
- des moyens de soufflage (10a, 10b) associés audit conduit de sortie (40) pour diriger, en fonction des différences de poids, lesdits fruits vers une première ouverture de sortie (4) et lesdits déchets végétaux vers une seconde ouverture de sortie (5);
- des moyens de tri mobiles comprenant une première roue à peignes (81) tournant autour d'un axe perpendiculaire à ladite direction de traitement (X), ladite roue comprenant une pluralité de peignes (8c) disposés radialement par rapport audit axe, lesdits peignes s'imbriquant dans des espaces de ladite une grille (91) pour retenir les déchets végétaux maintenus sur la grille, dans lequel le mouvement relatif desdits peignes (8c) par rapport à ladite grille (91) entraîne le détachement du fruit fixé au dit matériau végétal;
ledit appareil étant **caractérisé en ce qu'**il comprend une seconde grille en forme de peigne verticale fixe (92) disposée perpendiculairement par rapport à ladite grille horizontale fixe (91) et s'imbriquant dans ladite première roue à peignes (81), ledit déchet végétal étant déplacé de ladite grille horizontale (91) vers ladite grille verticale (92) par ladite première roue à peignes (81), ce en quoi le mouvement relatif entre ladite première roue à peignes (81) et ladite grille verticale (92) entraîne un détachement supplémentaire de fruits qui sont restés attachés au dit matériau végétal.

2. L'appareil selon la revendication 1, dans lequel lesdits moyens de tri mobiles comprennent en outre une deuxième roue à peignes (82) et une troisième roue à peignes (83) agencées séquentiellement dans ladite direction de traitement (X) et tournant en sens opposé par rapport à ladite première roue (81), lesdites deuxième et troisième roues comprenant une pluralité de peignes disposés radialement par rapport à leur propre axe de rotation, les peignes desdites première, deuxième et troisième roues étant mutuellement imbriqués pendant la rotation desdites roues pour transporter le produit brut de la première roue (81) à la troisième roue (83) selon ladite direction de traitement.

3. L'appareil selon la revendication 2, dans lequel ladite seconde grille verticale fixe (92) est agencée, en référence au sens de rotation de ladite première roue, dans une position consécutive par rapport à ladite première grille (91) et en position aval par rapport à la zone d'imbrication de ladite première roue (81) avec la seconde roue (82), ledit déchet végétal étant déplacé par ladite première roue (81) depuis ladite grille horizontale (91) vers ladite grille verticale (92), le matériau bloqué par ladite seconde grille (92) tombant vers ladite seconde roue (82).

4. L'appareil selon l'une des revendications 2 et 3, dans lequel une troisième grille fixe en forme de peigne (93) est agencée horizontalement, comme ladite première grille (91), et s'imbriquant avec ladite troisième roue (83).

5. L'appareil selon la revendication 4, dans lequel chacune desdites grilles (91, 92, 93) comprend une pluralité de barres rectilignes parallèles (9a), une extrémité de chacune desdites barres étant liée à un châssis dudit appareil, l'extrémité opposée étant libre.

6. L'appareil selon la revendication 5, dans lequel chacune desdites roues à peignes (81, 82, 83) comprend des rangées de dents (8b) disposées radialement autour d'un moyeu, chaque rang définissant un peigne (8c) de la roue.|

7. L'appareil selon la revendication 6, dans lequel lesdites barres (9a) desdites grilles sont espacées pour permettre le passage dudit fruit et autres déchets de dimensions comparables, et la pénétration desdites dents (8b) de chaque roue.

8. L'appareil selon l'une quelconque des revendications précédentes, dans lequel un grillage (11) est agencé en-dessous de ladite première roue (81), un peigne (12) étant agencé pour s'imbriquer dans ledit grillage (11) par glissement selon une direction de glissement perpendiculaire à ladite direction de traitement (X) pour pousser le déchet tombé de ladite roue sur ledit grillage vers une ouverture de sortie latérale (13).

9. L'appareil selon la revendication 8, dans lequel un flux d'air latéral (14) agit ledit grillage, adapté pour soulever le matériau tombé sur le grillage de façon qu'il puisse être saisi et entraîné en rotation par ladite première roue (81).

10. L'appareil selon l'une quelconque des revendications précédentes, dans lequel lesdits moyens de soufflage sont des ventilateurs électriques (10a, 10b).

11. L'appareil selon la revendication 10, dans lequel lesdits ventilateurs comprennent un ventilateur supérieur (10a) agencé de façon que le courant d'air qu'il génère soit dirigé vers ladite seconde ouverture de sortie (5) et un ventilateur inférieur (10b) agencé de façon que le flux d'air généré par lui soit dirigé vers ladite première ouverture de sortie (4).

12. L'appareil selon l'une quelconque des revendications précédentes, dans lequel lesdits moyens d'alimentation comprennent une table vibrante (7).

13. L'appareil selon la revendication 12, dans lequel lesdits moyens d'alimentation comprennent en outre une bande de convoyage (6), ladite table vibrante (7) étant agencée entre ladite bande de convoyage et ladite grille (91).

14. L'appareil selon l'une quelconque des revendications précédentes, dans lequel une seconde table vibrante (15) est disposée entre lesdites première et seconde ouvertures de sortie (4, 5), en position inclinée vers ladite première ouverture de sortie (4).

15. L'appareil selon l'une quelconque des revendications précédentes, dans lequel ladite première ouverture de sortie (4) est en position haute par rapport à un plan de sol sur lequel repose l'appareil, des moyens pour la collecte desdits fruits, tels qu'une bande transporteuse (17), étant prévus au-dessous de ladite première ouverture de sortie (4).
